Europäisches Patentamt

**European Patent Office**

Office européen des brevets

(11) Veröffentlichungsnummer: **0 009 753**
A1

(12) # EUROPÄISCHE PATENTANMELDUNG

(21) Anmeldenummer: **79103631.2**

(22) Anmeldetag: **25.09.79**

(51) Int. Cl.³: **B 23 K 7/06**

(30) Priorität: **04.10.78 DE 2843269**

(43) Veröffentlichungstag der Anmeldung:
**16.04.80 Patentblatt 80/8**

(84) Benannte Vertragsstaaten:
**BE CH DE FR GB LU NL SE**

(71) Anmelder: **GeGa Gesellschaft Für Gastechnik Lotz
GmbH & Co. KG
Gräsiger Weg 7a
D-6238 Hofheim-Wallau(DE)**

(72) Erfinder: **Hinz, Alfred
Teichkamp 8
D-3320 Salzgitter 1(DE)**

(74) Vertreter: **Blumbach, Paul-Günther, Dipl.-Ing. et al,
Blumbach.Weser.Bergen.Kramer Zwirner.Brehm
Patentanwälte Sonnenberger Strasse 43
D-6200 Wiesbaden 1(DE)**

(54) **Verfahren und Vorrichtung zur Steuerung von Flämmaschinen zum Abflämmen von Oberflächen, insbesondere von Brammen.**

(57) Bei einem Verfahren zur Steuerung eines konstantbleibenden, berührungsfreien Flämmabstandes der Flämmbrenner zur Oberfläche von Brammen oder dergleichen und zur Steuerung der Flämmbrennerventile wird die Brammenbreite von einer Kamera erfaßt und auf einem Monitor aufgezeichnet um Düsen, die nicht über der Bramme sind, abzuschalten. Von einer Kamera II wird der Lichtspalt des Flammenbildes zwischen Flämmbalkenunterkante und Brammenoberfläche erfaßt und über den Monitor der Abstand des Flämmbalkens über der Brammenoberfläche eingestellt.

./...

Croydon Printing Company Ltd

EP 0 009 753 A1

# BLUMBACH · WESER · BERGEN · KRAMER 0009753
## ZWIRNER · BREHM

### PATENTANWÄLTE IN MÜNCHEN UND WIESBADEN

Patentconsult Radeckestraße 43 8000 München 60 Telefon (089) 883603/883604 Telex 05-212313 Telegramme Patentconsult
Patentconsult Sonnenberger Straße 43 6200 Wiesbaden Telefon (06121) 562943/561998 Telex 04-186237 Telegramme Patentconsult

GeGa                                          Fall 23
Gesellschaft für Gasetechnik
Lotz GmbH & Co. KG
Gräsiger Weg 7a
D-6238 Hofheim-Wallau
-----------------------------

Verfahren und Vorrichtung zur
Steuerung von Flämmaschinen zum
Abflämmen von Oberflächen, insbesondere von Brammen
-----------------------------------

Die Erfindung betrifft ein Verfahren zur Steuerung
eines konstant bleibenden, berührungsfreien Flämmabstandes der Flämmbrenner zur Oberfläche von Brammen
oder dergleichen und zur Steuerung der Flämmbrennerventile für eine wirtschaftliche Nutzung der Brenngarse, sowie zur Erzeugung optimaler Flämmoberflächen unter Benutzung einer an sich bekannten Fernsehmeßeinrichtung mit Fernsehkamera und Monitor, und eine Vorrichtung zur Durchführung des Verfahrens für die Zu-
bzw. Abschaltung der für die unterschiedlichen Bram-

München: R. Kramer Dipl.-Ing. · W. Weser Dipl.-Phys. Dr. rer. nat. · H. P. Brehm Dipl.-Chem. Dr. phil. nat.
Wiesbaden: P. G. Blumbach Dipl.-Ing. · P. Bergen Dipl.-Ing. Dr. jur. · G. Zwirner Dipl.-Ing. Dipl.-W.-Ing

menbreiten erforderlichen Flämmbrenner.

Zum Abflämmen von fehlerhaften Oberflächen von Stahlbrammen, -blöcken und dergleichen sind Einrichtungen zum Konstanthalten eines erforderlichen Flämmabstandes des Flämmbalkens mit den Flämmbrennern über der zu flämmenden Oberfläche bekannt.

Bei der Mehrzahl dieser Einrichtungen wird der Abstand der Flämmbrenner über Tastorgane geregelt, die vor oder neben den Flämmbrennern angeordnet sind. Bei unebenen Brammenoberflächen ist eine solche Regelung unzureichend, da die Tastorgane relativ weit außerhalb des Flämmbereiches angeordnet werden müssen, um funktionsfähig zu sein.

Bei diesen bekannten Einrichtungen kann der tatsächliche Flämmabstand der Flämmbrenner über der Oberfläche im Schmelzbereich der Flämmung der zugeordneten Hub- und Senkeinrichtung nicht vermittelt werden.

Man hat dann versucht, mittels dieser bekannten Tastorgane das Gewicht des Brennerbalkens über eine zugeordnete Hubeinrichtung zu reduzieren und den Flämmbalken selbst mit Kufen über die Brammenoberfläche reiten zu lassen. Auch diese Regelung führte sehr oft zu großen Schäden an den Flämmaschinen, da die Regelung außerhalb des Flämmbereiches zu unbestimmte Regelwerte an die Hubeinrichtung weitergibt.

Ferner führte die ungenaue Höhenregelung zu unsauberen Flämmoberflächen und zur unwirtschaftlichen Ausnutzung der Brenngase, da der erforderliche Gasdurchsatz in Bezug auf Gasdruck und -menge von dem Abstand der Flämmbrenner von der zu flämmenden Oberfläche abhängig ist.

Um den Flämmbalken berührungsfrei und genauer über die Brammenoberfläche führen zu können, wurde bereits eine Einrichtung zum Konstanthalten des Flämmabstandes eines Flämmbrenners vorgeschlagen (DT-AS 16 27 559), bei der ein mit Abstand vor dem Brenner angeordnetes Tastorgan verwendet wird. Die Lageveränderungen des Tastorganes werden auf ein Aufzeichnungsgerät übertragen, die Aufzeichnungen durch ein der Brennerverstelleinrichtung zugeordnetes Lesegerät mit nach einer dem Abstand zwischen Brenner und Tastorgang entsprechenden zeitlichen Verzögerung gelesen und in Steuerimpulse für die Brennerverstellvorrichtung umgewandelt.

Auch dieser Vorschlag führte nicht zu einem befriedigenden Ergebnis, da die hier in Anwendung gebrachte Tastrolle die Unebenheiten der Brammenoberfläche nur in einer Linie erfaßt und aufzeichnet, aber nicht die un-

0009753

ebene Oberfläche insgesamt. Außerdem weichen die gespeicherten Werte von der kalten Bramme von den tatsächlichen Werten beim Flämmvorgang durch Wärmeverzug der Bramme ab, so daß nach diesem bekannten Verfahren eine korrekte Abstandregelung nicht durchführbar ist.

Aufgabe der vorliegenden Erfindung ist daher die Entwicklung eines neuen Verfahrens und einer neuen Vorrichtung zur Vermeidung der vorbeschriebenen Nachteile, mit denen die bisher bekannten Flämmvorrichtungen und -maschinen behaftet sind.

Darüber hinaus stellt sich der Erfindung die weitere Aufgabe, den Abstand zwischen dem Flämmbalken und der Brammenoberfläche nicht nur berührungsfrei zu messen, sondern auch die Flämmbrenner im konstanten Abstand berührungsfrei über die Brammenoberfläche so genau zu führen, daß dabei die Brenngase wirtschaftlich genutzt und Flämmoberflächen optimaler Güte erzeugt werden können.

Zur Lösung der gestellten Aufgabe wird bei einem Verfahren gemäß dem Oberbegriff erfindungsgemäß vorgeschlagen, daß zunächst die Brammenbreite mindestens im Differenzbereich der minimalsten und maximalsten Breite ($b_{max} - b_{min}$) von einer ersten Kamera erfaßt und auf einen zugeordneten Monitor mit der Position der Flämmbrenner aufgezeichnet wird, wobei die nicht über der Brammenoberfläche befindlichen Flämmbrenner von Hand oder automatisch über Impulse von Schaltkontakten der einzelnen Flämmbrenner im Monitor ausgeschaltet werden. Durch diese Maßnahme wird zunächst erreicht, daß die hochwertigen Brenngase nicht aus den Flämmbrennern ausströmen können, die sich nicht über der zu flämmenden Oberfläche befinden. Mittels einer zweiten hinter dem Flämmbalken in Flämmrichtung und etwas oberhalb der Ebene der zu flämmenden Oberfläche fest installierten Kamera wird der Lichtspalt des Flammenbildes zwischen Flämmbalkenunterkante und Brammenoberfläche erfaßt und die Höhe des Lichtspaltes als Abstandsmaß in Relation auf dem Monitor in Zeilenbreiten aufgezeichnet.

Die Steuerung erfolgt von dieser - den Abstand des Flämmbalkens über der Brammenoberfläche bestimmenden - Meßhöhe von Hand oder automatisch durch Abtastung der entsprechenden Anzahl der Zeilen.

Neben der Erfassung des Flämmabstandes hat die Beobachtungsmöglichkeit der Brammenvorderkante mittels einer Kamera und einem Monitor noch den wesentlichen, zusätzlichen Vorteil, daß der Anflämmvorgang genau überwacht werden kann. So kann über den Monitor mühelos festgestellt werden, ob alle Flämmdüsen einwandfrei arbeiten und ob die Vorderkante der Bramme beim Anflämmen auf der gesamten Breite in den erforderlichen schmelzflüssigen Zustand übergegangen ist.

Ferner wird der tatsächliche Flämmabstand der Flämmbrenner über der Oberfläche der Bramme unmittelbar im Flämmbereich nicht nur exakt gemessen, sondern auch in Bezug auf die Meßgröße an dieser Stelle geregelt, so daß der Brenngasdruck bei gleichbleibendem Brenngasdurchsatz durch die Flämmbrenner weitgehend konstant bleibt. Dadurch werden die Brenngase optimal genutzt und gleichzeitig durch gleichmäßigen Abbrand Flämmoberflächen ausgezeichneter Güte erzeugt.

Für die Zu- bzw. Abschaltung der für die unterschiedlichen Brammenbreite erforderlichen Flämmbrenner wird erfindungsgemäß vorgeschlagen, daß ein über Impulse von Schaltkontakten im Monitor ein- bzw. ausschaltbarer Servomotor im Bereich der den Flämmbrennern zugeordneten Brenngasventile angeordnet ist, der mit einer an sich bekannten Nockenwelle zur Betätigung von Gasventilen verbunden ist, womit jeder Flämmbrenner oder Flämmbrennergruppe nacheinander durch entsprechend versetzte Nocken zu- oder abschaltbar sind. Dadurch lassen sich vom Monitor aus bequem und störungsfrei von Hand oder automatisch durch Abtastung der auf dem Monitor erscheinenden Brammenkante, von der Außenkante der maximalen Breite ausgehend, alle nicht erforderlichen Flämmbrenner der Reihe nach abschalten bzw. in entgegengesetzter Richtung zuschalten.

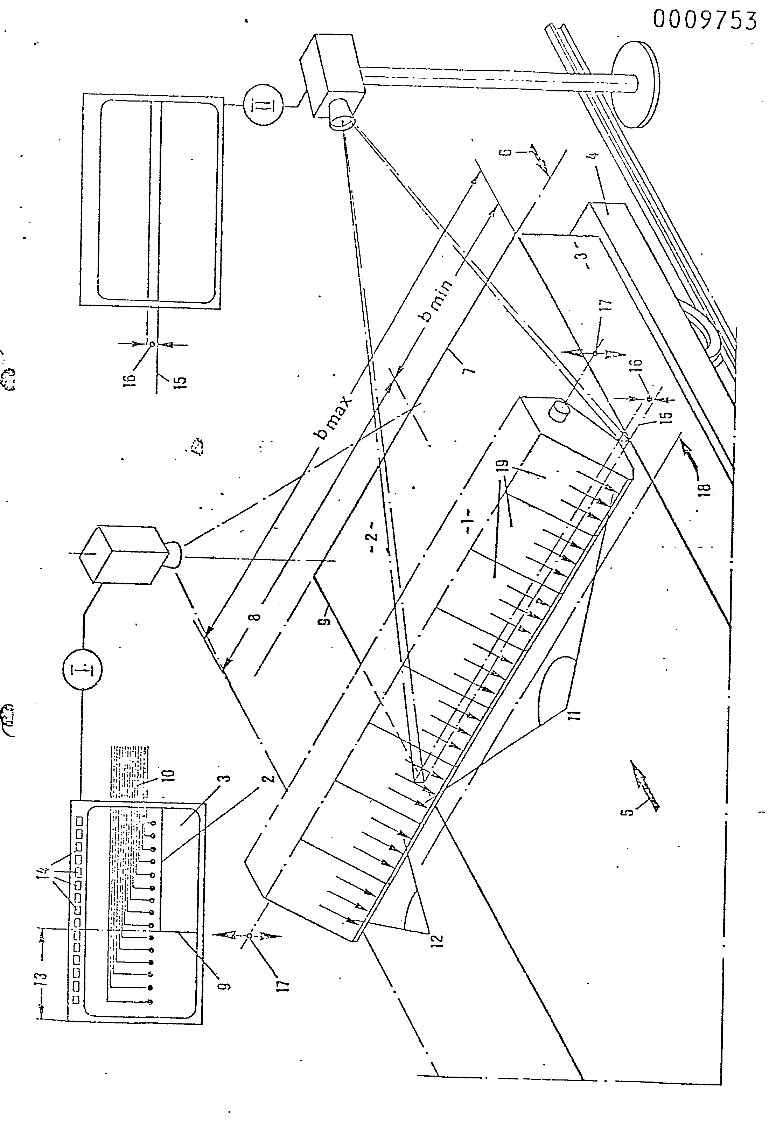

Das erfindungsgemäße Verfahren wird im folgenden anhand der beiliegenden Zeichnung beispielsweise näher erläutert.

Die Zeichnung zeigt eine schematische Darstellung der Anordnung der ersten Kamera I für die Erfassung der Brammenbreiten und die Anordnung der zweiten Kamera II für die Abstandsmessung zwischen dem Flämmbalken 1 einer Flämmaschine und der Oberfläche 2 einer Bramme 3. Die zugehörige Flämmmaschine mit der Hubeinrichtung des Flämmbalkens 1 ist in der Zeichnung nicht dargestellt.

Bevor die Bramme 3 unter den hochgefahrenen Flämmbalken 1 bis in die Anflämmposition 18 gefahren wird, erfaßt die Kamera I die im Bereich 8 liegende Brammenkante 9 und überträgt diese auf den zugehörigen Monitor I. Die für die Flämmung erforderlichen Flämmbrenner 11 - durch Pfeile symbolisiert - befinden sich über der Brammenoberfläche 2. Die Flämmbrenner 12 befinden sich außerhalb der dargestellten Bramme 3 und werden für den Flämmvorgang nicht benötigt.

Die Schaltkontakte 10 geben Impulse zum Ein- und Ausschalten eines nicht dargestellten Servomotors, der über eine Nockenwelle die den Flämmbrennern 11, 12 zugeordneten Gasventile ab- bzw. zuschaltet. Die nicht über der Brammenoberfläche 2 befindlichen Flämmbrenner 12 werden im Monitor I durch die schematisch dargestellten Schaltkontakte 10 im Bereich 13 angezeigt. Diese geben Impulse zum Servomotor und schalten die entsprechenden Gasventile der zugeordneten Flämmbrenner 12 ab. Die Ab- und Zuschaltung der Gasventile für die Flämmbrenner 11, 12 kann über den Monitor I von Hand oder auch automatisch vorgenommen werden. Zweckmäßig ist im Monitor I eine Signaleinrichtung eingebaut, die z.B. über Leuchtdioden 14 anzeigt, welche Flämmbrenner 11, 12 zum jeweiligen Zeitpunkt ein- bzw. ausgeschaltet sind.

Nachdem die für die Brammenbreite erforderlichen Flämmbrenner 11 eingeschaltet sind, wird der Flämmbalken 1 in Nähe der Vorderkante 7 auf die Oberfläche 2 der Bramme 3 abgesenkt, damit wird die Meßbasis 15 ermittelt. Hierzu wird die Bramme 3 etwa in die Meßposition 6 gefahren.

Darauf wird der Flämmbalken 1 auf den günstigsten - in bezug auf Brenngasdruck und -menge ermittelten - Flämmabstand 16 über die Meßbasis 15 gefahren. Der vorgegebene Flämmabstand 16 des Flämmbalkens 1 wird zunächst in dieser Position durch die Hubeinrichtung 17 gehalten. Dann wird die Bramme 3 mittels des Brammenwagens 4 in entgegengesetzter Richtung zur Pfeilrichtung 5 in die Anflämm- und Startposition 18 zum Erwärmen der Brammenvorderkante 7 gefahren. Sobald die erforderliche Flämmtemperatur erreicht ist, wird das Flämmgas ($O_2$) eingeschaltet. Gleichzeitig beginnt der Vorschub des Brammenwagens 4, womit die Bramme 3 in Pfeilrichtung 5 in Bewegung gesetzt und in dem vorgegebenen Abstand 16 unter den Flämmbalken 1 gefahren wird. Nach einem Flämmweg bis ca. 500 mm schaltet die automatische Flämmhöhenregelung ein, wobei die Kamera II den Lichtspalt erfaßt und durch ständiges Nachrgeln des im Monitor II aufgezeichneten Lichtspaltes den Abstand 16 konstant hält.

Nach dem erfindungsgemäßen Verfahren und der Vorrichtung ist ein störungsfreier Flämmbetrieb zur Erzeugung sauberer Flämmoberflächen in bisher nicht bekannter Güte gewährleistet, wobei erhebliche Kosten an Brenngas, Reparaturen und Ausfallzeiten eingespart werden. Es hat sich gezeigt, daß nach dem erfindungsgemäßen Verfahren die Beobachtung und Steuerung des gesamten Flämmvorganges ausschließlich durch Fernbedienung über Fernsehkameras besser durchführbar ist, als bei bisher bekannten Flämmanlagen, bei denen der Flämmvorgang infolge einer erheblichen Blendwirkung bei direkter Beobachtung unzureichend kontrolliert und korrigiert werden kann.

BLUMBACH · WESER · BERGEN · KRAMER0009753
ZWIRNER · BREHM

PATENTANWÄLTE IN MÜNCHEN UND WIESBADEN

Patentconsult Radeckestraße 43  8000 München 60  Telefon (089) 883603/883604  Telex 05-212313  Telegramme Patentconsult
Patentconsult Sonnenberger Straße 43  6200 Wiesbaden  Telefon (06121) 562943/561998  Telex 04-186237  Telegramme Patentconsult

GeGa                                      Fall 23

Gesellschaft für Gasetechnik

Lotz GmbH & Co. KG

Gräsiger Weg 7a

D-6238 Hofheim-Wallau
------------------------------------------

P a t e n t a n s p r ü c h e
------------------------------------------

1. Verfahren zur Steuerung eines konstantbleibenden, berührungsfreien Flämmabstandes der Flämmbrenner zur Oberfläche von Brammen oder dergleichen und zur Steuerung der Flämmbrennerventile für eine wirtschaftliche Nutzung der Brenngase, sowie zur Erzeugung optimaler Flämmoberflächen unter Benutzung einer an sich bekannten Fernsehmeßeinrichtung mit Fernsehkamera und Monitor,

   d a d u r c h   g e k e n n z e i c h n e t ,

   daß die Brammenbreite (b) mindestens im Differenz-

   Bereich (8) zwischen bmin und bmax von einer Kamera (I) erfaßt und auf den Monitor (I) aufgezeichnet wird, wobei die nicht über der Brammenoberfläche (2)

München: R. Kramer Dipl -Ing · W Weser Dipl.-Phys. Dr. rer. nat. · H. P. Brehm Dipl.-Chem. Dr. phil. nat.
Wiesbaden: P. G. Blumbach Dipl.-Ing. · P. Bergen Dipl.-Ing. Dr. jur. · G. Zwirner Dipl.-Ing. Dipl.-W -Ing

0009753

befindlichen Flämmdüsen (12) im Bereich (13) von Hand oder automatisch über Impulse von Schaltkontakten (10) im Monitor (I) ausgeschaltet werden und, daß mittels einer zweiten hinter dem Flämmbalken (1) in Flämmrichtung und etwa oberhalb der Ebene der zu flämmenden Oberfläche (2) fest installierten Kamera (II) der Lichtspalt des Flammenbildes zwischen Flämmbalkenunterkante (1) und Brammenoberfläche (2) erfaßt wird, die Höhe des Lichtspaltes als Abstandsmaß (16) in Relation auf dem Monitor (I) durch eine Anzahl von Zeilen aufgezeichnet wird und die Steuerung von dieser - den Abstand des Flämmbalkens (1) über der Brammenoberfläche (2) bestimmenden - Meßhöhe (16) von Hand oder automatisch durch Abtastung der entsprechenden Anzahl der Zeilen erfolgt.

2. Vorrichtung zur Durchführung des Verfahrens für die Zu- bzw. Abschaltung der für die unterschiedlichen Brammenbreiten erforderlichen Flämmbrenner nach Anspruch 1,
d a d u r c h   g e k e n n z e i c h n e t ,
daß ein über Impulse von Schaltkontakten (10) im Monitor (9) ein- bzw. ausschaltbarer Servomotor im Bereich der Flämmbrennerventile angeordnet ist, der mit einer an sich bekannten Nockenwelle zur Betätigung von Gasventilen verbunden ist, womit jeder einzelne Flämmbrenner (11, 12) und/oder jede einzelne Flämmbrennergruppe (19) nacheinander durch entsprechend ausgebildete, versetzte Nocken zu- oder abschaltbar sind.

0009753

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - B - 1 627 559</u> (MESSER GRIES-HEIM)<br><br>+ Gesamt + <br><br>-- <br><br>H. MANN u. H.J. FISCHER "Fernseh-technik", Band II, 1959 FACHVERLAG LEIPZIG.<br><br>+ Seite 418 und 419 + <br><br>-- <br><br>CHR. ROSE "Industrielles Fern-sehen", 1959, R. OLDENBOURG MÜNCHEN<br><br>+ Seiten 76, 77 + <br><br>---- | <br><br><br>1<br><br><br><br><br>1 |

**KLASSIFIKATION DER ANMELDUNG (Int.Cl.³)** 3

B 23 K 7/06

**RECHERCHIERTE SACHGEBIETE (Int.Cl.³)** 3

B 23 K 7/06
B 23 K 7/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer. |
|---|---|---|
| WIEN | 19-12-1979 | BENCZE |